# EUROPÄISCHE PATENTSCHRIFT

(11) **EP 3 365 575 B1**
(45) Veröffentlichungstag und Bekanntmachung des Hinweises auf die Patenterteilung: **26.02.2020**
(21) Anmeldenummer: 16788631.6
(22) Anmeldetag: 13.10.2016
(51) Int. Cl.: F16D 41/04, F16F 15/00, F16D 13/54, F16D 25/08, B60K 6/48

(54) **KUPPLUNGS-DREHSCHWINGUNGSDÄMPFER-ZUSAMMENBAU MIT EINER IN EINEM DREHTEIL EINES DREHSCHWINGUNGSDÄMPFERS INTEGRIERTE HYBRIDTRENNKUPPLUNG**
CLUTCH ROTARY VIBRATION DAMPER ASSEMBLY HAVING A HYBRID SEPARATING CLUTCH INTEGRATED IN A ROTATING PART OF A ROTARY VIBRATION DAMPER
ENSEMBLE AMORTISSEUR DE VIBRATIONS DE TORSION À EMBRAYAGE, MUNI D'UN EMBRAYAGE DE COUPURE HYBRIDE INTÉGRÉ DANS UN ÉLÉMENT ROTATIF D'UN AMORTISSEUR DE VIBRATIONS DE TORSION

(30) Priorität: 22.10.2015 DE 102015220596
(43) Veröffentlichungstag der Anmeldung: 29.08.2018
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2016/200471
(87) Internationale Veröffentlichungsnummer: WO 2017/067551

(56) Entgegenhaltungen:
- EP-A1- 1 555 450
- EP-A1- 1 555 450
- CN-A- 103 277 422
- CN-A- 103 277 422
- DE-A1-102011 106 399
- DE-A1-102011 106 399
- DE-A1-102014 203 954
- DE-A1-102014 203 954
- DE-A1-102014 206 844
- DE-A1-102014 206 844
- JP-A- 2010 071 380
- JP-A- 2010 071 380
- US-A1- 2007 037 659
- US-A1- 2007 037 659

## Beschreibung

Die Erfindung betrifft einen Kupplungs-Drehschwingungsdämpfer-Zusammenbau gemäß dem Obergriff des Anspruchs 1. Desweiteren betrifft die Erfindung auch einen hybriden Antriebsstrang eines Fahrzeuges / einen Antriebsstrang eines Hybridfahrzeuges mit einem solchen Kupplungs-Drehschwingungsdämpfer-Zusammenbau.

Aus dem Stand der Technik sind solche Kupplungs-Drehschwingungsdämpfer-Zusammenbauten bereits gattungsgemäß bekannt. Die DE 10 2012 222 110 A1 offenbart etwa eine Kupplungseinrichtung mit einer Betätigungseinrichtung für einen Antriebsstrang eines Kraftfahrzeuges aufweisend eine Brennkraftmaschine, eine elektrische Maschine sowie eine Getriebeeinrichtung. Die elektrische Maschine weist auf übliche Weise einen Stator und einen Rotor auf und die Kupplungseinrichtung ist in dem Antriebsstrang zwischen der Brennkraftmaschine einerseits und der elektrischen Maschine sowie der Getriebeeinrichtung andererseits angeordnet. Die Kupplungseinrichtung und die Betätigungseinrichtung sind in dem Rotor der elektrischen Maschine integriert.

Die DE 10 2004 023 673 A1 offenbart ein Verfahren zur Steuerung des Antriebsstrangs eines Hybridfahrzeuges, das einen Parallel-Hybridantrieb mit einer seriellen Anordnung eines Verbrennungsmotors, einer als Motor-Stator-Generator ausgebildeten und mit einer Schwungmasse versehenen Elektromaschine und eines abtriebsseitig mit einem Achsantrieb verbundenen Fahrgetriebes aufweist.

Desweiteren offenbart die DE 10 2014 203 954 A1 einen Kupplungs-Drehschwingungsdämpfer-Zusammenbau gemäß dem Oberbegriff des Anspruchs 1.

Bezüglich weiteren Standes der Technik wird auf die EP 1 555 450 A1, die DE 10 2014 206 844 A1, die DE 10 2011 106399 A1, die US 2007/037659 A1, die CN 103 277 422 A und die JP 2010 071 380 A verwiesen.

Die aus dem Stand der Technik bekannten Kupplungs-Drehschwingungsdämpfer-Zusammenbauten weisen jedoch zumeist relativ aufwändig ausgestaltete Systeme auf, wobei insbesondere die Kupplungseinrichtungen dieser Zusammenbauten häufig relativ aufwändig aufgebaut sind. Auch können die Kupplungseinrichtungen in zumindest manchen Ausführungen nur mit einer relativ komplexen Anordnung betätigt werden.

Es ist daher die Aufgabe der vorliegenden Erfindung, diese aus dem Stand der Technik bekannten Nachteile zu beheben und ein System aus Kupplung und Drehschwingungsdämpfer zur Verfügung zu stellen, das in jeglichen Betriebszuständen eines hybriden Antriebsstranges möglichst verlässlich zwischen den einzelnen Zuständen umschaltbar sein soll, wobei dessen Aufbau gleichzeitig deutlich vereinfacht werden soll.

Diese Aufgabe wird mit den in den unabhängigen Ansprüchen angegebenen Maßnahmen gelöst.

Weitere vorteilhafte Ausgestaltungen der vorliegenden Erfindung sind Gegenstand der abhängigen Ansprüche.

Eine Blattfedereinheit ist derart in dem zweiten Kupplungsbestandteil angebracht ist, dass durch diese Blattfedereinheit in einer ersten Drehrichtung des ersten Kupplungsbestandteils relativ zu dem zweiten Kupplungsbestandteil eine zusätzliche axiale Anpresskraft zum Aneinanderandrücken der Kupplungsbestandteile (auf die Kupplungsbestandteile) eingeleitet ist / wird.

Dadurch wird gewährleistet, dass die Kupplungseinrichtung unter einem geringen technischen Aufwand in ihrem eingekuppelten Zustand stets mit einer ausreichenden Festigkeit geschlossen ist und die Kupplungsbestandteile besonders stabil drehfest miteinander verbunden sind. Die Dauerfestigkeit des erfindungsgemäßen Kupplungs-Drehschwingungsdämpfer-Zusammenbaus wird dadurch ebenfalls deutlich erhöht.

Von Vorteil ist es auch, wenn die Blattfedereinheit zumindest eine Blattfeder aufweist, die zwei stofflich voneinander getrennte Abschnitte des zweiten Kupplungsbestandteiles drehfest miteinander verbindet. Dadurch ist eine besonders geschickte Ausgestaltung der Kupplungseinrichtung als eine Blattfederkupplung umgesetzt. Sind weiter bevorzugt jedoch mehrere Blattfedern vorgesehen, die zu zumindest einem Blattfederpaket zusammengesetzt sind, kann die zusätzlich wirkende axiale Anpresskraft weiter erhöht werden.

Ein erster Abschnitt des zweiten Kupplungsbestandteiles ist dabei vorzugsweise als ein, zumindest eine (zweite) Reibscheibe, vorzugsweise jedoch mehrere (zweite) Reibscheiben, drehfest sowie axial verschiebbar aufnehmender Träger / Tragbestandteil ausgebildet. Somit ist die Kupplungseinrichtung noch kompakter ausgebildet.

In diesem Zusammenhang ist es zudem vorteilhaft, wenn ein zweiter Abschnitt des zweiten Kupplungsbestandteiles als ein zur drehfesten Verbindung mit einer Antriebswelle eines Getriebes und/oder einer elektromotorischen Maschine vorbereitetes Nabenteil ausgebildet ist. Dadurch ist die Kupplungseinrichtung noch kompakter ausgestaltet.

Ist der erste Kupplungsbestandteil im Weiteren an dem zweiten Drehteil angeordnet / angebracht / befestigt / vorgesehen, ist eine noch kompaktere Ausbildung des Kupplungs-Drehschwingungsdämpfer-Zusammenbau umgesetzt.

Der erste Kupplungsbestandteil weist zumindest eine (erste) Reibscheibe, vorzugsweise jedoch mehrere (erste) Reibscheiben auf, die in axialer Richtung verschiebbar sowie drehfest an einem Hülsenbereich des zweiten Drehteils aufgenommen ist / sind. Dadurch ist die Kupplungseinrichtung besonders geschickt an dem zweiten Drehteil des Drehschwingungsdämpfers integriert.

Da die zumindest eine (erste) Reibscheibe des erstes Kupplungsbestandteils an einer radialen Innenseite des Hülsenbereiches angeordnet / aufgenommen ist, istdie Kupplungseinrichtung besonders platzsparend in einem radialen Innenraum des zweiten Drehteils integrierbar.

Im Weiteren betrifft die Erfindung auch einen (hybriden) Antriebsstrang eines (Hybrid-) Kraftfahrzeuges, mit einer Verbrennungskraftmaschine, wie einem Otto- oder Dieselmotor, einem Kupplungs-Drehschwingungsdämpfer-Zusammenbau nach einem der zuvor beschriebenen Ausführungsformen, wobei das erste Drehteil (unmittelbar oder mittelbar) drehfest mit einer Ausgangswelle der Verbrennungskraftmaschine verbunden ist, sowie mit einer elektromotorischen Maschine, die vorzugsweise als elektromotorische Antriebsmaschine ausgestaltet ist, deren Antriebswelle drehfest mit dem zweiten Kupplungsbestandteil der Kupplungseinrichtung verbunden ist. Dadurch ist auch ein Antriebsstrang besonders effektiv aufgebaut.

In einer weiteren Ausführung ist es dabei auch von Vorteil, wenn die elektromotorische Maschine einen Rotor aufweist, der drehfest mit der Antriebswelle verbunden ist, wobei eine Kupplungsbetätigungseinrichtung zumindest abschnittsweise (mit einem konzentrischen Geberzylinder) in einem Aufnahmeraum des Rotors angeordnet ist. Dadurch ist eine kompakte Ausbildung des Antriebsstranges auch in axialer Richtung umgesetzt.

In diesem Zusammenhang ist es auch vorteilhaft, wenn das zweite Drehteil mittels einer Freilaufeinrichtung mit der Antriebswelle wirkverbunden ist. Dadurch ist auch eine direkte Drehmomentübertragung in einer Sperrstellung der Freilaufeinrichtung von dem zweiten Drehteil auf die Antriebswelle umgesetzt. In einer Entsperrstellung der Freilaufeinrichtung kann Drehmoment indirekt über die Kupplungseinrichtung übertragen werden.

In anderen Worten ausgedrückt, ist somit ein Kupplungs-Drehschwingungsdämpfer-Zusammenbau umgesetzt, der eine Hybridtrennkupplung / K0-Kupplung als Kupplungseinrichtung in einem Abtriebsflansch (dem zweiten Drehteil) eines als Zweimassenschwungrad ausgebildeten Drehschwingungsdämpfers aufweist, wobei die Hybridtrennkupplung / K0-Kupplung ähnlich einer Blattfederkupplung aufgebaut ist. Der Drehschwingungsdämpfer ist für einen Antriebsstrang eines Hybridfahrzeuges mit einer eingangsseitigen Primärmasse und einer ausgangsseitigen Sekundärmasse ausgebildet. Die Primärmasse ist mit dem Verbrennungsmotor / der Verbrennungskraftmaschine verbunden, während die Sekundärmasse über eine Ausgangswelle (Antriebswelle) mit der Elektromaschine (elektrischer Fahrmotor ggf. mit Generatorfunktion) und einer Anfahrkupplung sowie einem Drehmomentwandler verbunden ist. Die Sekundärmasse weist einen im Wesentlichen topfförmig ausgebildeten Abtriebsflansch auf, in dessen Innerem die Abtriebswelle und eine Trennkupplung (K0-Kupplung) angeordnet sind. Erfindungsgemäß ist eine Blattfederkupplung in Form der Kupplungseinrichtung eingesetzt. Das Betätigungssystem für die K0-Kupplung, bspw. ein konzentrischer Geberzylinder, kann im Rotor der Elektromaschine zumindest abschnittsweise untergebracht sein. Für die Übertragung des (durch den Drehschwingungsdämpfer gedämpften) Zugmoments vom Verbrennungsmotor zur Elektromaschine ist ein Freilauf vorgesehen.

Die Erfindung wird nun nachfolgend anhand von Figuren in einem Ausführungsbeispiel näher erläutert.

Es zeigen:
- Fig. 1: eine schematische Ansicht eines Antriebsstranges aufweisend einen erfin-dungsgemäßen Kupplungs-Drehschwingungsdämpfer-Zusammenbau,
- Fig. 2: eine Längsschnittdarstellung des erfindungsgemäßen Kupplungs-Drehschwingungsdämpfer-Zusammenbaus, wie er in dem Antriebsstrang nach Fig. 1 eingesetzt ist, wobei insbesondere der Aufbau des Drehschwin-gungsdämpfers sowie der Kupplungseinrichtung gut erkennbar ist,
- Fig. 3: eine perspektivische Darstellung des erfindungsgemäßen Kupplungs-Drehschwingungsdämpfer-Zusammenbaus nach Fig. 2 im Halbschnitt, in der das erste Drehteil des Drehschwingungsdämpfers gut erkennbar ist,
- Fig. 4: eine perspektivische Darstellung der Kupplungseinrichtung, wie sie in dem er-findungsgemäßen Kupplungs-Drehschwingungsdämpfer-Zusammenbau nach den Fign. 2 und 3 eingesetzt ist, in der zum einen die Außenverzahnung der ersten Reibscheiben des ersten Kupplungsbestandteiles zu erkennen ist so-wie zum anderen die Anbringung der Blattfedereinheit radial innerhalb dieser ersten Reibscheiben gut zu erkennen ist,
- Fig. 5: eine perspektivische Darstellung der Kupplungseinrichtung nach Fig. 4, wobei auf die Darstellung der Reibscheiben der beiden Kupplungsbestandteile ver-zichtet ist, sodass die die zweiten Reibscheiben aufnehmende Außenverzah-nung des zweiten Kupplungsbestandteiles erkennbar ist,
- Fig. 6: eine perspektivische Darstellung der Kupplungseinrichtung nach Fig. 5 im Halbschnitt, in dem wiederum die Blattfedern / Blattfederpakete der Blattfe-dereinheit deutlich zu erkennen sind, wobei die Schnittebene so gewählt ist, dass die die Anbringung der Blattfedern / des Blattfederpaketes an einem zweiten Abschnitt des zweiten Kupplungsbestandteiles erkennbar ist, und
- Fig. 7: eine perspektivische Darstellung der Kupplungseinrichtung nach Fig. 5 im Halbschnitt, wobei die Schnittebene so gewählt ist, dass die Befestigung eines der Blattfedern / Blattfederpakete an einem ersten Abschnitt des zweiten Kupplungsbestandteiles deutlich zu erkennen ist.

Die Figuren sind lediglich schematischer Natur und dienen ausschließlich dem Verständnis der Erfindung. Die gleichen Elemente sind mit denselben Bezugszeichen versehen.

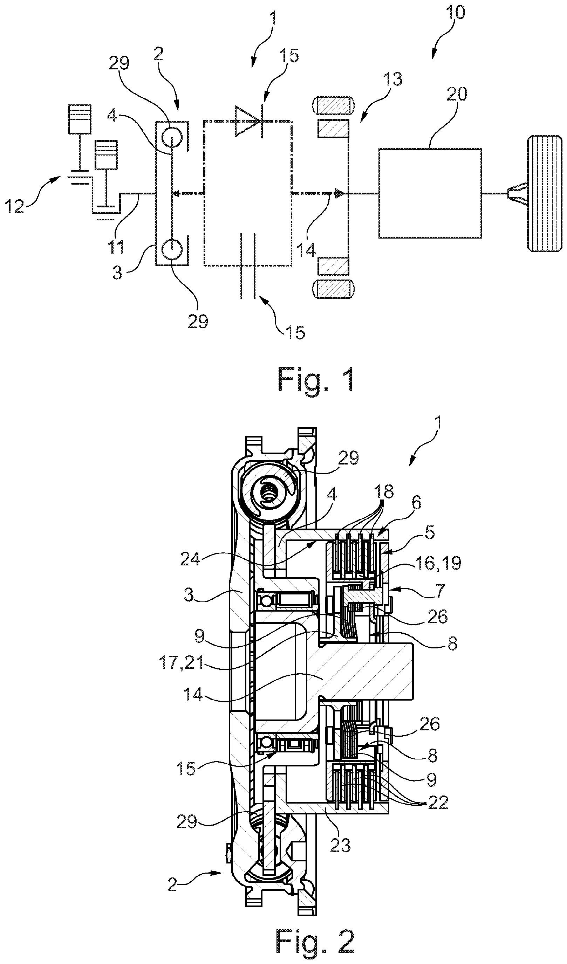

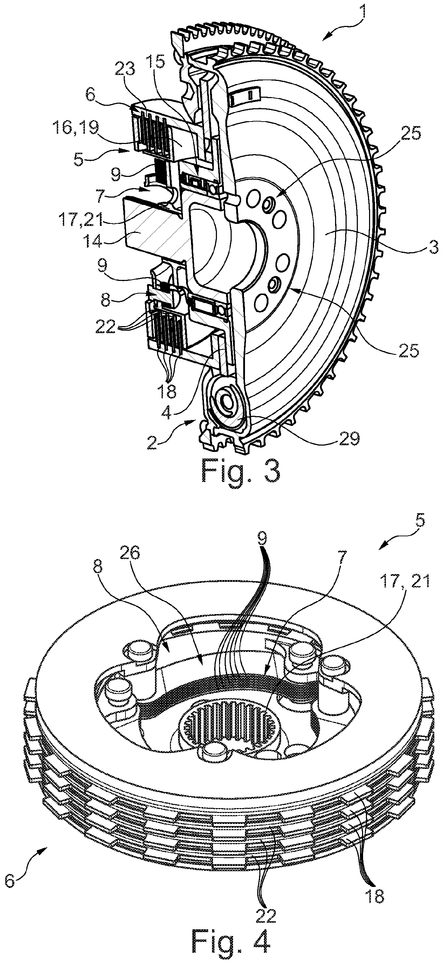

Der erfindungsgemäße Kupplungs-Drehschwingungsdämpfer-Zusammenbau 1 ist in den Fign. 2 und 3 besonders gut erkennbar sowie detailliert dargestellt. Der Kupplungs-Drehschwingungsdämpfer-Zusammenbau 1 ist ein System / Zusammenbau / eine Anordnung aus einer Kupplungseinrichtung 5 sowie einem Drehschwingungsdämpfer 2, der als Zweimassenschwungrad ausgebildet ist und somit alternativ nachfolgend auch als Zweimassenschwungrad 2 bezeichnet ist. Der Kupplungs-Drehschwingungsdämpfer-Zusammenbau 1 ist für einen hybriden Antriebsstrang 10, wie er in Fig. 1 schematisch zu erkennen ist, eines Kraftfahrzeuges vorbereitet. Der Kupplungs-Drehschwingungsdämpfer-Zusammenbau 1 ist folglich in seinem Betrieb in einem solchen Antriebsstrang 10 eingesetzt. Der Antriebsstrang 10 weist neben einer Verbrennungskraftmaschine 12, eine elektromotorische Maschine 13 auf. Auch ist ein Getriebe 20 (manuelles Schaltgetriebe, automatisches Schaltgetriebe oder Doppelkupplungsgetriebe) in dem Antriebsstrang 10 vorgesehen, wobei eine Antriebswelle 14 der elektromotorischen Maschine 13 unmittelbar auch eine Getriebeeingangswelle des Getriebes 20 ausbildet. Wie hier der Übersichtlichkeit halber nicht weiter dargestellt, weist die elektromotorische Maschine 13 einen Rotor auf, der drehfest mit der Antriebswelle 14 verbunden ist. Eine Kupplungsbestätigungseinrichtung zum Betätigen / Ein- und Ausrücken der Kupplungseinrichtung 5 ist abschnittsweise in einem Aufnahmeraum des Rotors angeordnet. Insbesondere ist ein Nehmerzylinder in Form eines konzentrisch zur Antriebswelle 14 angeordneten Nehmerzylinders in diesem Aufnahmeraum angeordnet.

Der Drehschwingungsdämpfer 2 weist entsprechend seiner Ausbildung als Zweimassenschwungrad 2 zunächst ein erstes Drehteil 3 auf, das, wie in Fig. 3 besonders gut zu erkennen ist, im Wesentlichen scheibenförmig ausgestaltet ist. Dieses erste Drehteil 3 weist mehrere Befestigungsmittelaufnahmen 25 zum stirnseitigen Befestigen an einer Ausgangswelle / Kurbelwelle 11 einer Verbrennungskraftmaschine 12 auf. Die Befestigungsmittelaufnahmen 25 dienen hierbei insbesondere zum Aufnehmen von als Befestigungsschrauben ausgebildeten Befestigungsmitteln, die das erste Drehteil 3 im Betrieb an der Ausgangswelle 11 festlegen / befestigen. Neben diesem ersten Drehteil 3 weist der Drehschwingungsdämpfer 2 ein zweites Drehteil 4 auf, das, gemäß dem üblichen Aufbau des Zweimassenschwungrades 2, mittels mehrerer Federelemente 29 federelastisch sowie drehschwingungsgedämpft in seiner Drehbewegung relativ zu dem ersten Drehteil 3 angeordnet ist. Das zweite Drehteil 4 ist somit mit dem ersten Drehteil 3 drehfest verbunden, jedoch in einem bestimmten Verdrehwinkelbereich gegenüber diesem ersten Drehteil 3 federelastisch sowie drehschwingungsgedämpft verdrehbar. Die einzelnen Federelemente 29 des Zweimassenschwungrades 2, die hier als Bogenfedern in radialen Zwischenräumen zwischen den beiden Drehteilen 3 und 4 angeordnet sind und jeweils in Umfangsrichtung an dem ersten Drehteil bzw. an dem zweiten Drehteil 3, 4 abgestützt sind, sind so angeordnet, dass sie eine durch die Verbrennungskraftmaschine erzeugte Drehschwingungsunförmigkeit / Drehunförmigkeit abdämpfen.

Das zweite Drehteil 4, wie in Fig. 2 auch gut zu erkennen, wirkt im Betrieb weiterhin unmittelbar mittels einer Freilaufeinrichtung 15 / einem Freilauf mit einer Antriebswelle 14 der elektromotorischen Maschine 13 / Elektromaschine zusammen. In einer Sperrstellung dieser Freilaufeinrichtung 15, bei einem Antreiben des zweiten Drehteils 4 mit Hilfe des ersten Drehteils 3 in einer ersten Drehrichtung, wie es bei einem Zugbetrieb der Verbrennungskraftmaschine 12 umgesetzt ist und wobei die Verbrennungskraftmaschine 12 antreibend auf die Antriebswelle 14 einwirkt, ist das zweite Drehteil 4 über die Freilaufeinrichtung 15 / über mehrere Klemmkörper der Freilaufeinrichtung 15 so mit der Antriebswelle 14 drehfest verbunden, dass ein Antriebsmoment direkt von dem zweiten Drehteil 4 an die Antriebswelle 14 übertragen wird. In einer Entsperrstellung der Freilaufeinrichtung 15, in der sich das zweite Drehteil 4 in einer zu der ersten Drehrichtung entgegengesetzten zweiten Drehrichtung dreht oder das erste Drehteil 4 langsamer als die Antriebswelle 14 in der ersten Drehrichtung dreht (d.h. in einem Schubzustand der Verbrennungskraftmaschine, etwa bei einem Start der Verbrennungskraftmaschine mit Hilfe der elektromotorischen Maschine 13 oder bei einer Motorbremse), sind das zweite Drehteil 4 und die Antriebswelle 14 nicht direkt über die Freilaufeinrichtung 15 miteinander drehverbunden, sondern lediglich über die Kupplungseinrichtung 5, wie nachfolgend näher beschrieben, drehfest miteinander verbindbar.

Dementsprechend weist der Kupplungs-Drehschwingungsdämpfer-Zusammenbau 1 auch eine Kupplungseinrichtung 5 auf. Die Kupplungseinrichtung 5 weist einen ersten Kupplungsbestandteil 6 sowie einen zweiten Kupplungsbestandteil 7 auf. Beide Kupplungsbestandteile 6, 7 sind in einem eingekuppelten Zustand / einer eingekuppelten Stellung der Kupplungseinrichtung 5 drehfest miteinander verbunden und in einem ausgekuppelten Zustand / einer ausgekuppelten Stellung der Kupplungseinrichtung 5 drehmomentenübertragungslos zueinander angeordnet. Wie in Fig. 2 gut zu erkennen, weist das zweite Drehteil 4 einen Hülsenbereich 23 auf, der sich um einen gewissen Abstand in axialer Richtung erstreckt. Insbesondere erstreckt sich dieser Hülsenbereich in axialer Richtung aus dem Bereich des Aufnahmeraums für die Federelemente 29 hinaus. Dieser zweite Drehteil 4 bildet in diesem Ausführungsbeispiel den ersten Kupplungsbestandteil 6 bereits unmittelbar / direkt aus. Hierfür weist der Hülsenbereich 23 eine Innenverzahnung an seiner radialen Innenseite 24 auf, die so ausgestaltet ist, dass sie mehrere Reibscheiben, die als erste Reibscheiben 18 bezeichnet sind, in axialer Richtung verschiebbar sowie drehfest aufnimmt. Der erste Kupplungsbestandteil 6 ist somit durch die Innenseite 24 des zweiten Drehteils 4 sowie die mehreren ersten Reibscheiben 18 gebildet.

Auch der zweite Kupplungsbestandteil 7 weist mehrere Reibscheiben, die nachfolgend als zweite Reibscheiben 22 bezeichnet sind, auf. Auch diese zweiten Reibscheiben 22 sind in axialer Richtung relativ zueinander verschiebbar. Dabei ist jeweils eine zweite Reibscheibe 22 zwischen zwei in axialer Richtung benachbart zueinander angeordneten ersten Reibscheiben 18 angeordnet. Die Reibscheiben 18 sowie 22 sind hierbei derart dimensioniert, dass die Kupplungseinrichtung 5 auch als Lamellenkupplung bezeichnet ist. Die Reiblamellen ausbildenden Reibelemente 18 sowie 22 sind in einer eingekuppelten Stellung so in axialer Richtung aneinander angedrückt / angepresst, dass sie unter Reibkraftschluss miteinander drehverbunden sind. In einer ausgekuppelten Stellung der Kupplungseinrichtung 5 sind die Reibscheiben 18 und 22 wiederum nicht reibkraftschlüssig aneinander anliegend, sondern frei relativ zueinander verdrehbar.

Der zweite Kupplungsbestandteil 7 weist weiterhin einen ersten Abschnitt 16 auf, der im Wesentlichen einen Innenkorb der Kupplungseinrichtung 5 ausbildet. An diesem Innenkorb / ersten Abschnitt 16 sind die zweiten Reibscheiben 18 an einer Verzahnung, nämlich an einer Außenverzahnung, drehfest sowie axial verschiebbar aufgenommen. Somit bildet der erste Abschnitt 16 einen korbförmigen Träger 19 aus. Neben dem ersten Abschnitt 16 gehört zu dem zweiten Kupplungsbestandteil 7 auch ein zweiter Abschnitt 17, der als Nabenteil 21 ausgestaltet ist und stofflich getrennt von dem ersten Abschnitt 16 ausgebildet ist. Das Nabenteil 21 ist im Betrieb drehfest mittels einer Kerbzahnverbindung mit der Antriebswelle 14 verbunden.

Erfindungsgemäß ist die Kupplungseinrichtung 5 als eine Blattfederkupplung ausgestaltet. Hierfür sind die beiden Abschnitte 16 und 17 über eine Blattfedereinheit 8 drehfest miteinander verbunden. Die Anordnung sowie Ausgestaltung der Blattfedereinheit 8 ist auch besonders gut in Zusammenwirkung mit den Fign. 4 bis 7 zu erkennen. Dabei bilden in dieser Ausführung mehrere, entlang des Umfangs / in Umfangsrichtung der Kupplungseinrichtung 5 / des zweiten Drehteils 4 verteilt angeordnete Blattfederpakete 26 die Blattfedereinheit 8 aus. Mit einem ersten Ende 27 ist jedes dieser Blattfederpakete 26 über eine Vernietung mit dem ersten Abschnitt 16 verbunden sowie mit einem zweiten Ende 28 mit dem Nabenteil / dem zweiten Abschnitt 17 drehfest verbunden. Die Blattfederpakete 26 weisen dabei jeweils auf übliche Weise mehrere, hier sechs Blattfedern 9 auf, die übereinander gelegt eine gemeinsame Federeinrichtung in Form des Blattfederpaketes 26 bilden. Die Blattfederpakete 26 sind so ausgestaltet und im Betrieb zwischen den beiden Abschnitten 16 und 17 eingespannt, dass die Blattfedereinheit eine gewisse axiale Vorspannkraft zwischen den beiden Abschnitten 16 und 17 im Betrieb erzeugt.

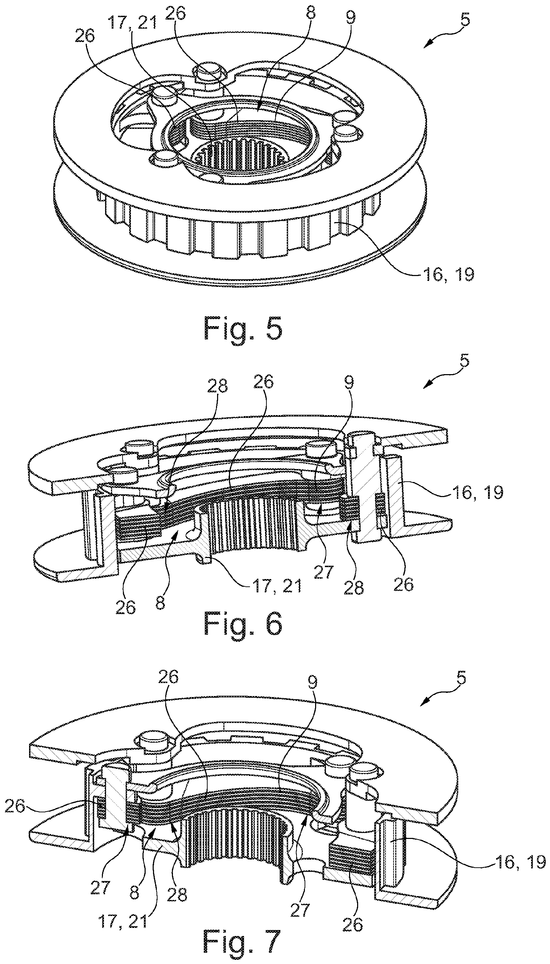

Wie in Fig. 6 auch besonders gut zu erkennen ist, erstrecken sich die Blattfedern 9 der Blattfederpakete 26 auch etwas in axialer Richtung, sodass die Blattfedern 9 schräg zu einer Radialrichtung verlaufen. Dies bewirkt, dass, wenn im Schubbetrieb der Verbrennungskraftmaschine sowie im eingekuppelten Zustand der Kupplungseinrichtung 5 Drehmoment von der Antriebswelle 14 in Richtung der Verbrennungskraftmaschine 12 / der Ausgangswelle 11 übertragen wird, die Blattfederpakete 26 so in Umfangsrichtung angetrieben sind, dass sie auch eine axiale Vorspannkraft entwickeln. Die Anordnung der Blattfedereinheit 8 ist dabei so gewählt, dass durch diese axiale Vorspannkraft (im Schubbetrieb der Verbrennungskraftmaschine 12) die Reibscheiben 18 und 22 mit einer zusätzlichen Anpresskraft aneinander angedrückt sind. Dadurch ist eine besonders stabile eingekuppelte Stellung der Kupplungseinrichtung 5 umgesetzt.

In anderen Worten ausgedrückt, ist in Fig. 2 der Aufbau der dämpferintegrierten Trennkupplung (Kupplungseinrichtung 5) sowie in Fig. 1 der prinzipielle Aufbau des Antriebstranges 10 dargestellt. Zur Schwingungsisolation ist zwischen Verbrennungsmotor (Verbrennungskraftmaschine 12) und Antriebsstrang 10 ein Dämpfer (Drehschwingungsdämpfer 2) geschaltet. Dieser wird direkt auf die Kurbelwelle (Ausgangswelle 11) geschraubt und besteht vereinfacht betrachtet aus der Primärschwungmasse / dem erstem Drehteil 3 (Verbrennerseite), den Bogenfedern 29 sowie der Sekundärschwungmasse / dem zweiten Drehteil 4 (Getriebeseite). Für die Übertragung des Zugmoments wird ein großer Freilauf 15 verwendet, welcher das gedämpfte Verbrennermoment mit der in Richtung Getriebe 20 / E-Maschine (elektromotorische Maschine 13) überträgt. Dieser schließt sich bei laufendem Verbrenner / laufender Verbrennungskraftmaschine 12 selbsttätig bei Drehzahlgleichheit und positivem Zugmoment. Es ist keine Betätigungsenergie erforderlich. Um ein Schubmoment übertragen zu können (Motorbremse / Verbrennerstart), wird eine Blattfederkupplung 5 eingesetzt. Je nach Fahrstrategie (prozentualer Zeitanteil mit angekoppeltem Verbrenner 12 im Schubbetrieb), kann die Blattfederkupplung 5 normally open bzw. normally closed ausgeführt sein. Zudem ist die Blattfederkupplung 5 vorzugsweise so ausgelegt, dass die Selbstverstärkung in Schubrichtung wirkt und somit die Betätigungskraft deutlich reduziert werden kann. Die E-Maschine 13 ist axial hinter der Trennkupplung 5 angebracht. In deren Rotor kann beispielsweise ein CSC (concentric slave cylinder / konzentrischer Nehmerzylinder) zur Betätigung der Kupplung 5 platzsparend integriert sein.

### Bezugszeichenliste

- 1: Kupplungs-Drehschwingungsdämpfer-Zusammenbau
- 2: Drehschwingungsdämpfer / Zweimassenschwungrad
- 3: erstes Drehteil
- 4: zweites Drehteil
- 5: Kupplungseinrichtung
- 6: erster Kupplungsbestandteil
- 7: zweiter Kupplungsbestandteil
- 8: Blattfedereinheit
- 9: Blattfeder
- 10: Antriebsstrang
- 11: Ausgangswelle
- 12: Verbrennungskraftmaschine
- 13: elektromotorische Maschine
- 14: Antriebswelle
- 15: Freilaufeinrichtung
- 16: erster Abschnitt
- 17: zweiter Abschnitt
- 18: erste Reibscheibe
- 19: Träger
- 20: Getriebe
- 21: Nabenteil
- 22: zweite Reibscheibe
- 23: Hülsenbereich
- 24: Innenseite
- 25: Befestigungsaufnahme
- 26: Blattfederpaket
- 27: erstes Ende
- 28: zweites Ende
- 29: Federelement

## Patentansprüche

1. Kupplungs-Drehschwingungsdämpfer-Zusammenbau (1) für einen hybriden Antriebsstrang (10) eines Kraftfahrzeuges, mit
einem zwei drehfest miteinander verbundene Drehteile (3, 4) aufweisenden Drehschwingungsdämpfer (2), wobei ein erstes Drehteil (3) zur drehfesten Verbindung mit einer Ausgangswelle (11) einer Verbrennungskraftmaschine (12) vorbereitet ist und ein zweites Drehteil (4) relativ zu dem ersten Drehteil (3) in einer Drehbewegung gedämpft angeordnet ist,
einer Kupplungseinrichtung (5), die mit einem ersten Kupplungsbestandteil (6), der in einer eingekuppelten Stellung der Kupplungseinrichtung (5) drehfest mit einem zweiten Kupplungsbestandteil (7) verbunden ist, an dem zweiten Drehteil (4) angebracht ist, und
einer Blattfedereinheit (8), die derart in dem zweiten Kupplungsbestandteil (7) angebracht ist, dass durch diese Blattfedereinheit (8) in einer ersten Drehrichtung des ersten Kupplungsbestandteils (6) relativ zu dem zweiten Kupplungsbestandteil (7) eine zusätzliche axiale Anpresskraft zum Aneinanderandrücken der Kupplungsbestandteile (6, 7) eingeleitet ist,
**dadurch gekennzeichnet, dass**
der erste Kupplungsbestandteil (6) zumindest eine Reibscheibe (18) aufweist, die in axialer Richtung verschiebbar sowie drehfest an einer radialen Innenseite (24) eines Hülsenbereiches (23) des zweiten Drehteils (4) aufgenommen ist.

2. Kupplungs-Drehschwingungsdämpfer-Zusammenbau (1) nach Anspruch 1, **dadurch gekennzeichnet, dass** die Blattfedereinheit (8) zumindest eine Blattfeder (9) aufweist, die zwei stofflich voneinander getrennte Abschnitte (16, 17) des zweiten Kupplungsbestandteils (7) miteinander verbindet.

3. Kupplungs-Drehschwingungsdämpfer-Zusammenbau (1) nach Anspruch 2, **dadurch gekennzeichnet, dass** ein erster Abschnitt (16) des zweiten Kupplungsbestandteils (7) als ein zumindest eine Reibscheibe (22) drehfest sowie axial verschiebbar aufnehmender Träger (19) ausgebildet ist.

4. Kupplungs-Drehschwingungsdämpfer-Zusammenbau (1) nach Anspruch 2 oder 3, **dadurch gekennzeichnet, dass** ein zweiter Abschnitt (17) des zweiten Kupplungsbestandteils (7) als ein zur drehfesten Verbindung mit einer Antriebswelle (14) eines Getriebes (20) und/oder einer elektromotorischen Maschine (13) vorbereitetes Nabenteil (21) ausgebildet ist.

5. Antriebsstrang (10) eines Kraftfahrzeuges, mit
einer Verbrennungskraftmaschine (12), und
einem Kupplungs-Drehschwingungsdämpfer-Zusammenbau (1) nach einem der Ansprüche 1 bis 7, wobei das erste Drehteil (3) drehfest mit einer Ausgangswelle (11) der Verbrennungskraftmaschine (12) verbunden ist, und
mit einer elektromotorischen Maschine (13), deren Antriebswelle (14) drehfest mit dem zweiten Kupplungsbestandteil (7) der Kupplungseinrichtung (5) verbunden ist.

6. Antriebsstrang (10) nach Anspruch 5, **dadurch gekennzeichnet, dass**
die elektromotorische Maschine (13) einen Rotor aufweist, der drehfest mit der Antriebswelle (14) verbunden ist, und
eine Kupplungsbestätigungseinrichtung zumindest abschnittsweise in einem Aufnahmeraum des Rotors angeordnet ist.

7. Antriebsstrang (10) nach Anspruch 5 oder 6, **dadurch gekennzeichnet, dass** das zweite Drehteil (4) mittels einer Freilaufeinrichtung (15) mit der Antriebswelle (14) wirkverbunden ist.

## Claims

1. Clutch/torsional vibration damper assembly (1) for a hybrid drive train (10) of a motor vehicle, having
a torsional vibration damper (2) which has two rotary parts (3, 4) which are connected to one another fixedly so as to rotate together, a first rotary part (3) being prepared for being connected fixedly to an output shaft (11) of an internal combustion engine (12) so as to rotate with it, and a second rotary part (4) being arranged such that it can be damped in a rotational movement relative to the first rotary part (3),
a clutch device (5) which is attached to the second rotary part (4) by way of a first clutch constituent part (6) which, in an engaged position of the clutch device (5), is connected fixedly to a second clutch constituent part (7) so as to rotate with it, and
a leaf spring unit (8) which is attached in the second clutch constituent part (7) in such a way that an additional axial pressing force for pressing the clutch constituent parts (6, 7) onto one another is introduced by way of the said leaf spring unit (8) in a first rotational direction of the first clutch constituent part (6) relative to the second clutch constituent part (7),
**characterized in that**
the first clutch constituent part (6) has at least one friction disc (18) which is received on a radial inner side (24) of a sleeve region (23) of the second rotary part (4) fixedly so as to rotate with it and such that it can be displaced in the axial direction.

2. Clutch/torsional vibration damper assembly (1) according to Claim 1, **characterized in that** the leaf spring unit (8) has at least one leaf spring (9) which connects two sections (16, 17) of the second clutch constituent part (7) to one another which are disconnected from one another in material terms.

3. Clutch/torsional vibration damper assembly (1) according to Claim 2, **characterized in that** a first section (16) of the second clutch constituent part (7) is configured as a carrier (19) which receives at least one friction disc (22) fixedly so as to rotate with it and such that it can be displaced axially.

4. Clutch/torsional vibration assembly (1) according to Claim 2 or 3, **characterized in that** a second section (17) of the second clutch constituent part (7) is configured as a hub part (21) which is prepared for being connected fixedly to a drive shaft (14) of a transmission (20) and/or an electric motor machine (13) so as to rotate with it.

5. Drive train (10) of a motor vehicle, having
an internal combustion engine (12), and
a clutch/torsional vibration damper assembly (1) according to one of Claims 1 to 7, the first rotary part (3) being connected fixedly to an output shaft (11) of the internal combustion engine (12) so as to rotate with it, and
having an electric motor machine (13), the drive shaft (14) of which is connected fixedly to the second clutch constituent part (7) of the clutch device (5) so as to rotate with it.

6. Drive train (10) according to Claim 5, **characterized in that**
the electric motor machine (13) has a rotor which is connected fixedly to the drive shaft (14) so as to rotate with it, and
a clutch actuating device is arranged at least in sections in a receiving space of the rotor.

7. Drive train (10) according to Claim 5 or 6, **characterized in that** the second rotary part (4) is operatively connected to the drive shaft (14) by means of a freewheel device (15).

## Revendications

1. Ensemble d'amortisseur d'oscillations de torsion à embrayage (1) pour une chaîne cinématique hybride (10) d'un véhicule automobile, comprenant
un amortisseur d'oscillations de torsion (2) présentant deux parties rotatives (3, 4) connectées de manière solidaire en rotation l'une à l'autre, une première partie rotative (3) étant prévue pour une liaison solidaire en rotation avec un arbre de sortie (11) d'un moteur à combustion interne (12) et une deuxième partie rotative (4) étant disposée par rapport à la première partie rotative (3) de manière amortie dans son mouvement de rotation,
un dispositif d'embrayage (5) qui est monté au niveau de la deuxième partie rotative (4) avec un premier composant d'embrayage (6) qui est connecté de manière solidaire en rotation à un deuxième composant d'embrayage (7) dans une position embrayée du dispositif d'embrayage (5), et
une unité de ressort à lame (8) qui est montée dans le deuxième composant d'embrayage (7) de telle sorte qu'une force de pressage axiale supplémentaire soit introduite par cette unité de ressort à lame (8), dans un premier sens de rotation du premier composant d'embrayage (6) par rapport au deuxième composant d'embrayage (7), pour appliquer l'un contre l'autre par pression les composants d'embrayage (6, 7),
**caractérisé en ce que**
le premier composant d'embrayage (6) présente au moins un disque de friction (18) qui est reçu de manière déplaçable dans la direction axiale ainsi que de manière solidaire en rotation au niveau d'un côté intérieur radial (24) d'une région de manchon (23) de la deuxième partie rotative (4).

2. Ensemble d'amortisseur d'oscillations de torsion à embrayage (1) selon la revendication 1, **caractérisé en ce que** l'unité de ressort à lame (8) présente au moins un ressort à lame (9) qui relie l'une à l'autre deux portions (16, 17) du deuxième composant d'embrayage (7) séparées matériellement l'une de l'autre.

3. Ensemble d'amortisseur d'oscillations de torsion à embrayage (1) selon la revendication 2, **caractérisé en ce qu'**une première portion (16) du deuxième composant d'embrayage (7) est réalisée sous forme de support (19) recevant, de manière solidaire en rotation ainsi que déplaçable axialement, au moins un disque de friction (22).

4. Ensemble d'amortisseur d'oscillations de torsion à embrayage (1) selon la revendication 2 ou 3, **caractérisé en ce qu'**une deuxième portion (17) du deuxième composant d'embrayage (7) est réalisée sous la forme d'une partie de moyeu (21) prévue pour la liaison solidaire en rotation à un arbre d'entraînement (14) d'une transmission (20) et/ou d'une machine à moteur électrique (13).

5. Chaîne cinématique (10) d'un véhicule automobile, comprenant
un moteur à combustion interne (12), et
un ensemble d'amortisseur d'oscillations de torsion à embrayage (1) selon l'une quelconque des revendications 1 à 7, la première partie rotative (3) étant connectée de manière solidaire en rotation à un arbre de sortie (11) du moteur à combustion interne (12), et
comprenant une machine à moteur électrique (13), dont l'arbre d'entraînement (14) est connecté de manière solidaire en rotation au deuxième composant d'embrayage (7) du dispositif d'embrayage (5).

6. Chaîne cinématique (10) selon la revendication 5, **caractérisée en ce que**
la machine à moteur électrique (13) présente un rotor qui est connecté de manière solidaire en rotation à l'arbre d'entraînement (14), et
un dispositif d'actionnement d'embrayage est disposé au moins en partie dans un espace de réception du rotor.

7. Chaîne cinématique (10) selon la revendication 5 ou 6, **caractérisée en ce que** la deuxième partie rotative (4) est en liaison fonctionnelle avec l'arbre d'entraînement (14) au moyen d'un dispositif de roue libre (15).
